# EUROPEAN PATENT APPLICATION

(11) **EP 1 182 823 A1**
(43) Date of publication of application: **27.02.2002**
(21) Application number: 00118088.4
(22) Date of filing: 23.08.2000
(51) Int. Cl.: H04L 12/28, H04L 12/24, H04L 12/66, H04L 29/06

(54) **Method of controlling a home network using a web browser**

(71) Applicant: Sony International (Europe) GmbH, 10785 Berlin (DE)
(72) Inventor: Hilt, Patrick, Advanced Tech. Center Stuttgart, 703247 Stuttgart (DE)
(74) Representative: Müller . Hoffmann & Partner Patentanwälte

(57) **Abstract**

In order to allow controlling of a home network (5) from remote, a gateway (1) connecting the home network (5) to a communication network (3) additionally comprises an Internet server module (6). The Internet server module (6) provides the gateway (1) with the same functionalities as an Internet Service Provider shows, like a point to point protocol server. This makes it possible to get access to the home network (5) by using the same computing devices (8) and software programs as normally used to get access to the Internet and browsing in the Internet.

## Description

The present invention pertains to a method of accessing and controlling a home network from remote via a communication network by using a communication device, the home network and the communication network being connectable by a gateway, and an apparatus therefore.

A commonly used method for interconnecting and controlling home devices is to use home networking. Using such a home network, it is possible that any home device controls and communicates with any other home device. Further, it is possible to control these devices from remote.

In order to enable remote control, it is common to use a gateway as an interface between the home network and a communication network, the communication network connecting the remote user to the gateway.

If the remote user posesses a computer including a modem and a web browser as a communication device, it may be desirable to use the Internet as a communication network to connect the remote user to the home network. However, in such a case, it is necessary to have the gateway permanently connected to the Internet, which is expensive and represents a security hazard.

It is an object of the present invention to provide a method of controlling a home network from remote, which is low in cost and which shows a high standard of security.

To solve this object, the present invention provides a method of accessing and controlling a home network from remote via a communication network by using a communication device, the home network and the communication network being connectable by a gateway, which is characterized by the steps of contacting the gateway similar to the contacting of an Internet Service Provider (ISP), establishing a connection between the communication device and the home network via the gateway similar to establishing a connection between an Internet capable device and the Internet via an ISP, and controlling the home network by communicating via the established connection.

Further, the present invention provides a gateway for connecting a user from remote via a communication network to a home network, which is characterized by an Internet server module means providing the gateway with the same functionalities as shown by an ISP-gateway.

Further preferred embodiments of this method and gateway according to the present invention defined in independent claims 1 and 11, respectively, are described in the respective subclaims.

An important aspect of the present invention is that the procedure of getting connected to the home network via the communication network and the gateway is carried out as if the home network is the Internet and if the gateway is an Internet Service Provider (ISP) connecting the communication network to the Internet. In other words, the gateway "behaves" like an ISP, especially during the procedure of getting connected to the home network. The steps of contacting the gateway and establishing a connection between the communication device and the home network via the gateway are carried out by the remote user utilizing the same or similar hardware devices and the same or similar software programs as normally used for getting access to the Internet via an ISP and browsing through the Internet. Further, the steps to be done by the remote user to get connected to the home network are very similar to the steps being necessary of getting connected to the Internet.

Preferably, the remote user utilizes a computing device, a modem and a browser software for accessing and controlling the home network.

The remote user contacts the gateway by using a suitable protocol for authenticating, as it is done during the procedure of contacting an ISP. Preferably, a point to point protocol (PPP) is used. The procedure of contacting the gateway is done by using for example a built-in modem or ISDN-device of the gateway capable of communicating with a built-in modem or ISDN-device of the remote communication device.

Using such an authenticating protocol, it is possible to establish a connection between the communication device and the gateway, this established connection being based on a data transport protocol which is also used to communicate within the Internet. Preferably, TCP/IP is used as data transport protocol.

As the "behaviour" of the gateway is similar to that of an ISP, it is very easy for the remote user to handle home network contolling: The remote user can utilize, as already mentioned, the same communication devices and software programs as normally used for browsing through the Internet, which are widely known and easy to use. This also means that generally no additional devices or software programs are needed to be installed on the communication device.

As most browsers use the hypertext transport protocol (HTTP) in order to communicate within the Internet, this protocol is also peferably used to communicate between the communication device and the gateway. However, it is also possible to use the wireless application protocol (WAP) to communicate between the communication device and the gateway, if the remote communication device is a WAP-enabled device. In such a case, the underlying data transport protocol includes data transport protocols like IP.

As communication within the home network is preferably done by using an IEEE 1394 protocol, the data transport protocols like TCP/IP used between the communication device and the gateway can be converted into the IEEE 1394 protocol by the gateway.

The communication network used to communicate between the remote communication device and the gateway may be a common telephone network or a mobile phone network or a combination of both, for example the public telephone network.

The communication device is not restricted to computers or WAP devices. Any device which is suitable to communicate via a communication network with the gateway, like a mobile hand-held, for example, can also be used.

If a cable modem connected to the Internet is part of the home network, the remote user can use the gateway as a "real" Internet service provider by establishing a connection between the communication device and the Internet via the communication network, the gateway and the cable modem.

A further advantage of the present invention is that no permanent link to the communication network is necessary, since the connection between the home network and the communication device can be established on demand. Further, by preferably using a telephone network and/or mobile phone network to communicate between the communication device and the gateway, the security hazard is very low, as it is very difficult to tap data transport within a telephone network. Further, authenticating procedures during the procedure of contacting the gateway provide additional security.

Another advantage of the present invention is that the direct connection between the communication device and the gateway enables accessing the home network while maintaining full functionality of the complete home network including computers.

Further, the connection in-between the communication device and the gateway can easily be re-established if it should break down, in contrast to a connection using the Internet.

Further advantages and features of the present invention will be explained below in conjunction with the following drawing.

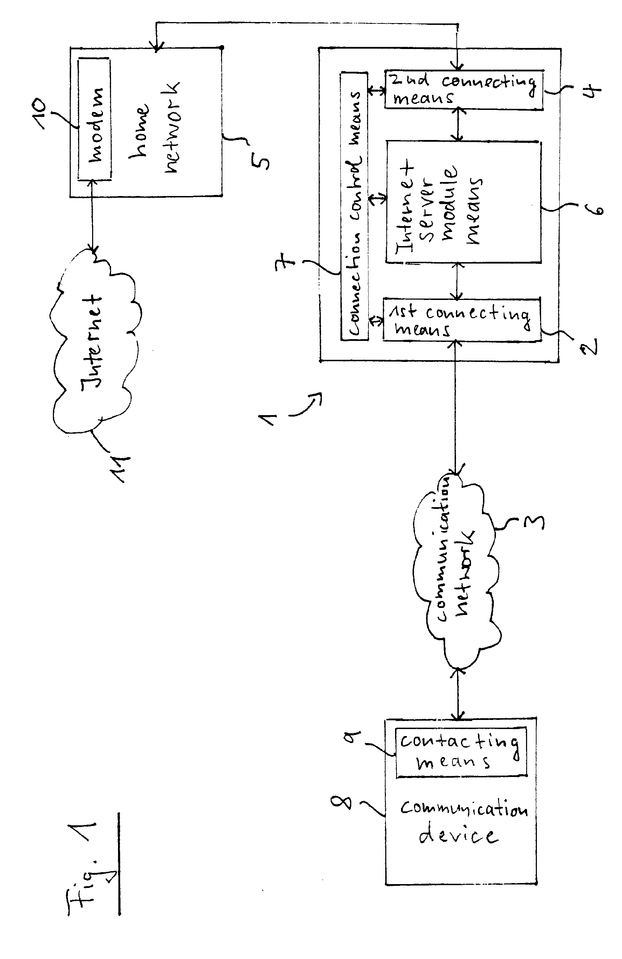

- **Fig. 1**: is an explanary preferred embodiment of a gateway in accordance with the present invention.

In the following description a preferred embodiment of a gateway for realizing the method described above will be given.

A gateway 1 comprises a first connecting means 2 to connect the gateway 1 to a communication network 3, and a second connecting means 4 for connecting the gateway 1 to a home network 5.
According to the present invention the gateway 1 further comprises an Internet server module means 6 which is connected to the first and the second connecting means 2, 4. Further, the gateway 1 comprises a connection control means 7 which is connected to the first and the second connecting means 2, 4 as well as to the Internet server module means 6.

The communication network 3 preferably comprises a telephone network and/ or a mobile phone network such as the public telephone network and connects the first connecting means 2 with the communication device 8. A built-in contacting means 9 of the communication device 8, for example a modem or an ISDN-device, is connectable via the communication network 3 to a modem or an ISDN-device (not shown) included in the first connecting means 2.

The Internet server module means 6 preferably comprises a point to point protocol server module (not shown), which manages the contacting process and the establishing of a connection between the home network 5 and the communication device 8. The Internet server module means 6 alternatively or additionally comprises a wireless application protocol server module (not shown) for communicating with WAP-enabled communication devices 8.

The second connecting means 4 may comprise an Internet home gateway module (not shown) for converting the data transport protocols like TCP/IP used to communicate between the communication device 8 and the Internet server module means 6 of the gateway 1 into an IEEE 1394 protocol or another protocol used within the home network 5.

The home network 5 may comprise a modem 10 connecting the home network to the Internet 11.

The connection control means 7 is activatable by the communication device 8 via the first connecting means 2. The communication between the first connecting means 2, the second connecting means 4 and the Internet server module means 6 is controllable by the activated connection control means 7.

## Claims

1. Method of accessing and controlling a home network (5) from remote via a communication network (3) by using a communication device (8), the home network (5) and the communication network (3) being connectable by a gateway (1), **characterized by** the following steps:
- contacting the gateway (1) similar to the contacting of an Internet Service Provider (ISP),
- establishing a connection between the communication device (8) and the home network (5) via the gateway (1) similar to establishing a connection between an internet capable device and the Internet via an ISP, and
- controlling the home network (5) by communicating via the established connection.

2. Method according to claim 1, **characterized by** using a point to point protocol (PPP) to contact the gateway (1).

3. Method according to claim 2, **characterized by** using TCP/IP as data transport protocol to communicate between the communication device (8) and the gateway (1) after having contacted the gateway (1).

4. Method according to anyone of claims 1 to 3, **characterized by** using a wireless application protocol (WAP) to communicate between the communication device (8) and the gateway (1) after having contacted the gateway (1).

5. Method according to anyone of claims 1 to 4, **characterized by** converting the protocol used to communicate between the communication device (8) and the gateway (1) into an IEEE 1394 protocol used within the home network (5) by the gateway (1).

6. Method according to anyone of the preceding claims, **characterized by** using a telephone network as communication network (3) to contact the gateway (1) and to communicate with the home network (5).

7. Method according to anyone of the preceding claims, **characterized by** using a modem or an ISDN-device as a built in contacting and communicating means (9) of the communication device (8) to contact a built-in modem or ISDN-device of the gateway (1) and to communicate with the gateway (1).

8. Method according to anyone of the preceding claims, **characterized by** using a browser-based communication software running on the communication device (8) to communicate between the user and the home network (5).

9. Method according to anyone of the preceding claims, **characterized by** using a computer, a handheld or a WAP-device as a communication device (8) to communicate between the communication device (8) and the home network (5).

10. Method according to anyone of the preceding claims, **characterized by** using a cable modem (10) as a home network device connected to the Internet (11) to establish a connection between the communication device (8) and the Internet (11) via the communication network (3), the gateway (1) and the cable modem (10).

11. Gateway (1) for connecting a user from remote via a communication network (3) to a home network (5), **characterized by** an Internet server module means (6) providing the gateway (1) with the same functionalities as shown by a gateway of an Internet Service Provider (ISP).

12. Gateway (1) according to claim 11, **characterized by** a first connecting means (2) connecting the gateway (1) to the communication network (3), a second connecting means (4) connecting the gateway (1) to the home network (5), and a connection control means (7) for establishing a connection between the home network (5) and the communication network (3) via the first connecting means (2), the Internet server module means (6) and the second connecting means (4).

13. Gateway (1) according to claim 11 or 12, **characterized in that** the Internet server module means (6) comprises a point to point protocol (PPP) server module.

14. Gateway (1) according to anyone of claims 11 or 13, **characterized in that** the Internet server module means (6) comprises a wireless application protocol (WAP) server module.

15. Gateway (1) according to anyone of the claims 11 to 14, **characterized in that** the second connecting means (4) conprises an Internet home gateway module for converting the protocol used by the Internet server module means (6) into an IEEE 1394-protocol.

16. Gateway (1) according to anyone of claims 12 to 15, **characterized in that** the first connecting means (2) comprises a modem or an ISDN device.

17. Gateway (1) according to anyone of claims 11 to 16, **characterized in that** the communication network (3) is a telephone network or a mobile phone network.

18. Gateway (1) according to anyone of claims 11 to 17, **characterized by** a cable modem (10) connected to the Internet (11) and being a part of the home network (5).

19. Gateway (1) according to anyone of claims 12 to 18, **characterized in that** the connection control means (7) is activatable by the user via the first connecting means (2), the communication between the first connecting means (2), the second connecting means (4) and the Internet server module means (6) being controllable by the activated connection control means (7).
